# EUROPEAN PATENT APPLICATION

(11) **EP 4 203 431 A1**
(43) Date of publication of application: **28.06.2023**
(21) Application number: 22203276.5
(22) Date of filing: 24.10.2022
(51) Int. Cl.: H04L 47/78, G06F 9/455, H04L 47/70, G06F 9/50

(54) **METHODS AND APPARATUS FOR NETWORK INTERFACE DEVICE-BASED EDGE COMPUTING**

(30) Priority: 22.12.2021 US 202117560231
(71) Applicant: Intel Corporation, Santa Clara, CA 95054 (US)
(72) Inventor: CONNOR, Patrick, Beaverton, 97007 (US); LIEDTKE, Kevin, Portland, 97229 (US); GUIM BERNAT, Francesc, 08036 Barcelona (ES); HEARN, James, 97124 Hillsboro (DE)
(74) Representative: Maiwald GmbH

(57) **Abstract**

Methods, apparatus, systems, and articles of manufacture are disclosed to facilitate network interface device based edge computing. A disclosed example includes threshold analyzer circuitry to identify a resource inactivity threshold for first a resource associated with the network interface device, the resource inactivity threshold indicative of a duration of time that the first resource is not utilized; resource allocator circuitry to determine that the resource meets the resource inactivity threshold; and virtual platform manager circuitry to generate a virtual platform associated with the network interface device based on the determination, the generated virtual platform to reduce latency in execution of a function.

## Description

### FIELD OF THE DISCLOSURE

This disclosure relates generally to network interface devices and, more particularly, to methods and apparatus for network interface device-based Edge computing.

### BACKGROUND

Edge network environments enable services near endpoint devices that interact with these services. Edge network environments may include infrastructure, such as a base station or micro datacenter hosting an Edge service, that is connected to cloud infrastructure, endpoint devices, or additional Edge infrastructure via networks such as a wide area network (WAN), a metropolitan area network (MAN), or (more generally) the internet. Edge services are generally closer in network proximity to endpoint devices than cloud infrastructure, such as datacenter servers.

### BRIEF DESCRIPTION OF THE DRAWINGS

FIG. 1 illustrates an overview of an example Edge cloud configuration for Edge computing.
FIG. 2 illustrates operational layers among endpoints, an example Edge cloud, and cloud computing environments.
FIG. 3 illustrates an example approach for networking and services in an Edge computing system.
FIG. 4 illustrates an example first Edge networking infrastructure.
FIG. 5 illustrates an example second Edge networking infrastructure implementing one or more network interface devices as disclosed further herein.
FIG. 6 is a block diagram of an example third Edge networking architecture for facilitating network interface device-based Edge computing.
FIG. 7 is a block diagram of an example system for network interface device-based Edge computing.
FIG. 8 illustrates an example network interface device for Edge computing including example virtual platform management engine circuitry.
FIG. 9 illustrates the example virtual platform management engine circuitry of FIG. 8.
FIG. 10 is a flowchart representative of example machine readable instructions and/or example operations that may be executed by example processor circuitry to implement the virtual platform management engine circuitry of FIG. 9.
FIG. 11 is a flowchart representative of example machine readable instructions and/or example operations that may be executed by example processor circuitry to implement the management interface circuitry of FIG. 9.
FIG. 12 is a block diagram of an example processing platform including processor circuitry structured to execute the example machine readable instructions and/or the example operations of FIGS. 10-11 to implement the virtual platform management engine circuitry of FIG. 9.
FIG. 13 is a block diagram of an example implementation of the processor circuitry of FIG. 12.
FIG. 14 is a block diagram of another example implementation of the processor circuitry of FIG. 12.
FIG. 15 is a block diagram of an example software distribution platform (e.g., one or more servers) to distribute software (e.g., software corresponding to the example machine readable instructions of FIGS. 10-11 to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

As used herein, unless otherwise stated, the term "above" describes the relationship of two parts relative to Earth. A first part is above a second part, if at least a portion of the second part is between Earth and the first part. Likewise, as used herein, a first part is "below" a second part when at least a portion of the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, temporality, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

As used herein, "approximately" and "about" refer to dimensions that may not be exact due to manufacturing tolerances and/or other real-world imperfections. As used herein "substantially real time" refers to occurrence in a near instantaneous manner recognizing there may be real-world delays for computing time, transmission, etc. Thus, unless otherwise specified, "substantially real time" refers to real time +/- 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, event based, ad hoc, as needed, isochronous, and/or one-time events.

As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmed with instructions to perform specific operations and including one or more semiconductor-based logic devices (e.g., electrical hardware implemented by one or more transistors). Examples of processor circuitry include programmed microprocessors, Field Programmable Gate Arrays (FPGAs) that may instantiate instructions, Central Processor Units (CPUs), System on a Chip (SoC), Graphics Processor Units (GPUs), General-Purpose Graphics Processor Units (GPGPUs), Digital Signal Processors (DSPs), Infrastructure Processing Units (IPUs), Data Processing Units (DPU), other Processing Units (e.g., XPUs), or microcontrollers and integrated circuits such as Application Specific Integrated Circuits (ASICs). For example, an XPU may be implemented by a heterogeneous computing system including multiple types of processor circuitry (e.g., one or more FPGAs, one or more CPUs, one or more GPUs, one or more DSPs, etc., and/or a combination thereof) and application programming interface(s) (API(s)) that may assign computing task(s) to whichever one(s) of the multiple types of the processing circuitry is/are best suited to execute the computing task(s).

### DETAILED DESCRIPTION

Edge computing is a distributed computing scheme that brings computation and data storage close to the physical location at which it is needed. Reducing distance between data computation devices and data generating devices reduces data transport latency, as data is not sent across long distances. In Edge computing, data is stored and processed near the end-point device, improving response time, saving bandwidth, and improving reliability. Additionally, Edge computing systems may still communicate with cloud devices (e.g., datacenters) when workloads exceed local compute and/or storage capabilities.

Some Edge computing solutions include edge infrastructure servers hosted in colocation facilities (e.g., rented or hosted server and/or storage racks). Some Edge computing solutions include virtualized or containerized applications to be run in Edge servers. However, processing data at a collocated Edge server, or at an Edge enabled switch, still maintains significant distance from a requesting server (e.g., increased latency). Furthermore, as a number of downstream nodes increases, Edge enabled switches may be unable to scale accordingly (e.g., further increasing latency). Additionally, if a connection between a requesting server and an Edge enabled switch goes down, the switch cannot respond to requests.

In general, deploying Edge computing systems involves configuring platforms for many distinct use cases (e.g., network function virtualization (NFV), augmented reality (AR), virtual reality (VR), content delivery networks (CDN), video analytics, etc.). Furthermore, each use case and workload may have a unique resource footprint. A general/service-oriented platform may include a first configuration of resources, with nonvolatile memory express (NVMe) based solid state memory, network interface controllers (NICs), etc. A NFV focused Edge computing server may include a second configuration of resources, allocating relatively more hardware resources (e.g., available motherboard slots) for high performance NICs.

Some systems that use traditional NICs may become inefficient when workloads deployed in the platform are not network bound. Similarly, a general-purpose platform (e.g., of static resource allocation) may be inefficient when a deployed workload changes. Thus, prior solutions for Edge infrastructure are inflexible and may perform inefficiently in response to changing and/or varied workload demands. Thus, prior solutions have at least two shortcomings: (1) physical distance between devices, and (2) inflexibility. Examples disclosed herein improve upon at least these two shortcomings.

Examples disclosed herein intelligently configure an Edge platform in a general-purpose and flexible way, providing a platform that is performant across different workloads with a single platform configuration. Some examples disclosed herein address prior limitations by improving upon NIC architectures. Examples disclosed herein set forth smart NICs with logic to divide a NIC in two or more virtual partitions. Partitions may include different capabilities (e.g., number of cores, amount of memory etc.). In some examples disclosed herein, one partition is utilized for traffic from a connected platform, and one or more partitions are utilized as independent compute platforms (e.g., with a virtualized baseboard management controller). Furthermore, an availability of one or more of the compute partitions can be provided to an orchestration edge architecture as a compute platform capable of executing functions or other workloads.

Some examples disclosed herein move Edge compute capabilities closer to requesting devices by adding programmable compute capabilities to NICs. Examples disclosed herein move processing workloads normally handled in an Edge data center closer to requesting computing devices. Examples disclosed herein disclose smart NICs with improved capabilities. However, the techniques described herein can alternatively be instantiated and/or implemented on any type of Edge accelerating hardware/software platform.

Some examples disclosed herein include monitoring logic to identify resources of a computing platform (e.g., an Edge NIC) that are unutilized and/or underutilized (e.g., not used for a threshold period of time). Some examples disclosed herein include logic for physically or virtually allocating and/or transferring resources (e.g., within a NIC) identified in a main pool of resources to create a new virtual platform (e.g., a new smart NIC partition).

Some examples disclosed herein include logic to connect a computing platform (e.g., a smart NIC, an Edge NIC) to an Edge orchestrator to register and manage a virtual platform including: (1) offering out-of-band interfaces to configure the platform; (2) offering out-of-band interfaces to discover the resources within the platform and perform zero-touch provisioning; and (3) offering a mechanism to register a bit-stream and/or application in a virtual platform to execute new service or function.

Some examples disclosed herein include an Edge NIC (e.g., a smart NIC, accelerator, enhanced NIC) with lower latency than an Edge switch. Examples disclosed herein are more scalable than some switch based solutions that cannot scale to accommodate additional downstream nodes. Examples disclosed herein enable on-premises servers to perform secure authentication and communication without relying on external servers/switches. Examples disclosed herein provide a level of insulation against the impacts of network outages or other connectivity disruptions.

Some examples disclosed herein include an Edge NIC with the capability to allow an Edge server to program the Edge NIC to respond to certain requests on behalf of the Edge server, the Edge NIC independent from containers or VMs installed on the requesting system. Some Edge NIC based solutions described herein improve response latency and allow an Edge server to intelligently offload tasks to an Edge NIC. Examples disclosed herein include, but are not limited to, capabilities to: respond to sensor readings from IoT devices, automatically provision back-end services, trigger custom HTTP requests, spin down services when not in use, execute lambda functions, etc. Some examples disclosed herein are fault tolerant (e.g., if a network goes down, functionality is not compromised). For example, an Edge NIC may respond as if it were a datacenter and a requesting system would not experience disruption (e.g., a manufacturing robot could continue unabated during a temporary network outage).

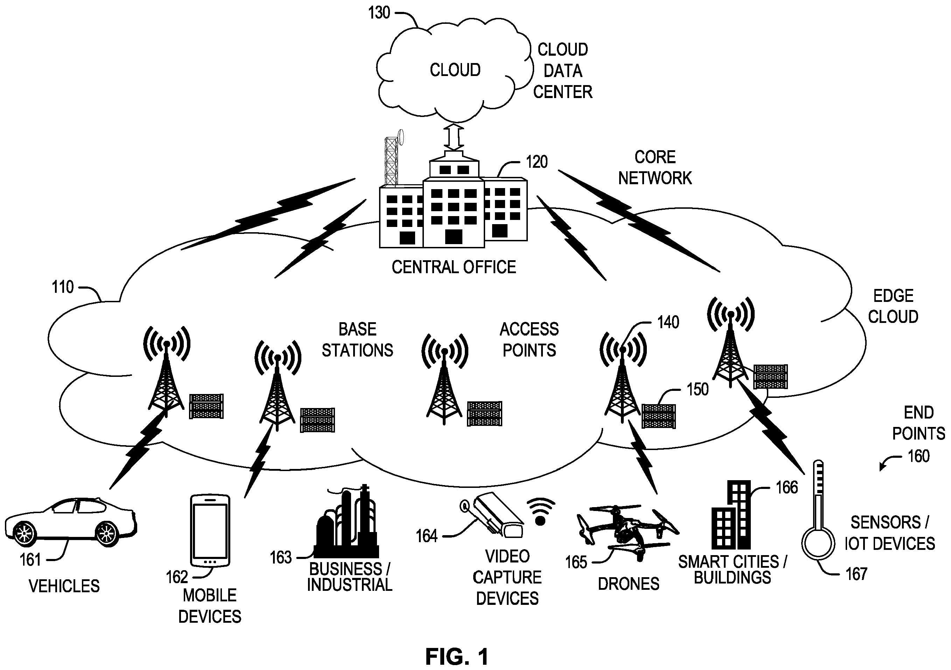

Turning to the figures, FIG. 1 is a block diagram 100 showing an overview of a configuration for Edge computing, which includes a layer of processing referred to in many of the following examples as an "Edge cloud". As shown, the Edge cloud 110 is co-located at an Edge location, such as an access point or base station 140, a local processing hub 150, or a central office 120, and thus may include multiple entities, devices, and equipment instances. The Edge cloud 110 is located much closer to the endpoint (consumer and producer) data sources 160 (e.g., autonomous vehicles 161, user equipment 162, business and industrial equipment 163, video capture devices 164, drones 165, smart cities and building devices 166, sensors and IoT devices 167, etc.) than the cloud data center 130. Compute, memory, and storage resources which are offered at the edges in the Edge cloud 110 are critical to providing ultra-low latency response times for services and functions used by the endpoint data sources 160 as well as reduce network backhaul traffic from the Edge cloud 110 toward cloud data center 130 thus improving energy consumption and overall network usages among other benefits.

Compute, memory, and storage are scarce resources, and generally decrease depending on the Edge location (e.g., fewer processing resources being available at consumer endpoint devices, than at a base station, than at a central office). However, the closer that the Edge location is to the endpoint (e.g., user equipment (UE)), the more that space and power is often constrained. Thus, Edge computing attempts to reduce the amount of resources needed for network services, through the distribution of more resources which are located closer both geographically and in network access time. In this manner, Edge computing attempts to bring the compute resources to the workload data where appropriate, or bring the workload data to the compute resources.

The following describes aspects of an Edge cloud architecture that covers multiple potential deployments and addresses restrictions that some network operators or service providers may have in their own infrastructures. These include, variation of configurations based on the Edge location (because edges at a base station level, for instance, may have more constrained performance and capabilities in a multi-tenant scenario); configurations based on the type of compute, memory, storage, fabric, acceleration, or like resources available to Edge locations, tiers of locations, or groups of locations; the service, security, and management and orchestration capabilities; and related objectives to achieve usability and performance of end services. These deployments may accomplish processing in network layers that may be considered as "near Edge", "close Edge", "local Edge", "middle Edge", or "far Edge" layers, depending on latency, distance, and timing characteristics.

Edge computing is a developing paradigm where computing is performed at or closer to the "Edge" of a network, typically through the use of a compute platform (e.g., x86 or ARM compute hardware architecture) implemented at base stations, gateways, network routers, or other devices which are much closer to endpoint devices producing and consuming the data. For example, Edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within Edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

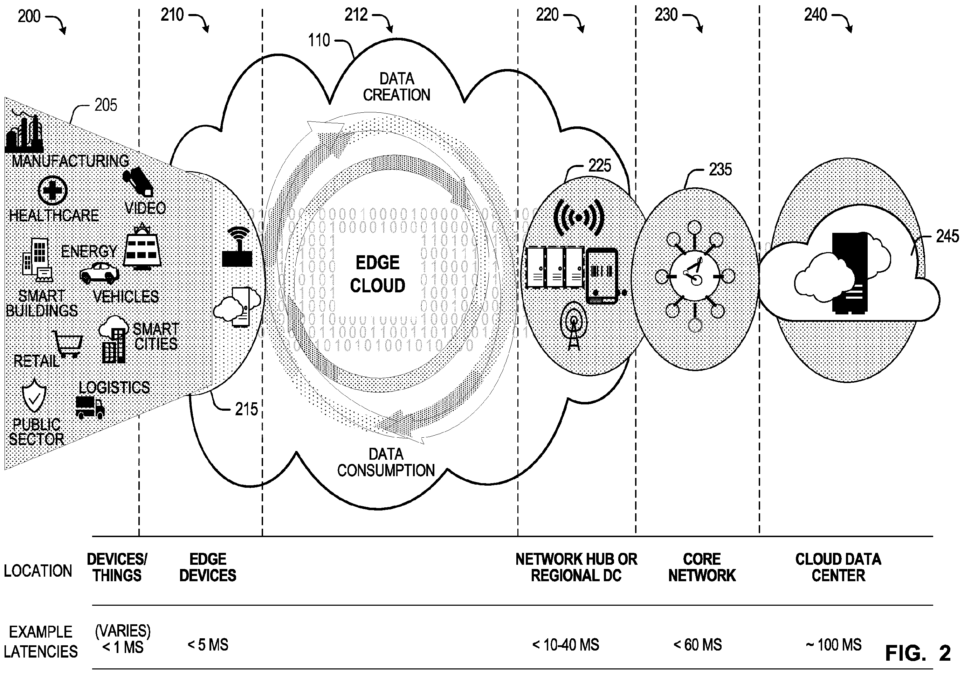

FIG. 2 illustrates operational layers among endpoints, an Edge cloud, and cloud computing environments. Specifically, FIG. 2 depicts examples of computational use cases 205, utilizing the Edge cloud 110 among multiple illustrative layers of network computing. The layers begin at an endpoint (devices and things) layer 200, which accesses the Edge cloud 110 to conduct data creation, analysis, and data consumption activities. The Edge cloud 110 may span multiple network layers, such as an Edge devices layer 210 having gateways, on-premise servers, or network equipment (nodes 215) located in physically proximate Edge systems; a network access layer 220, encompassing base stations, radio processing units, network hubs, regional data centers (DC), or local network equipment (equipment 225); and any equipment, devices, or nodes located therebetween (in layer 212, not illustrated in detail). The network communications within the Edge cloud 110 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 200, under 5 ms at the Edge devices layer 210, to even between 10 to 40 ms when communicating with nodes at the network access layer 220. Beyond the Edge cloud 110 are core network 230 and cloud data center 240 layers, each with increasing latency (e.g., between 50-60 ms at the core network layer 230, to 100 or more ms at the cloud data center layer). As a result, operations at a core network data center 235 or a cloud data center 245, with latencies of at least 50 to 100 ms or more, will not be able to accomplish many time-critical functions of the use cases 205. Each of these latency values are provided for purposes of illustration and contrast; it will be understood that the use of other access network mediums and technologies may further reduce the latencies. In some examples, respective portions of the network may be categorized as "close Edge", "local Edge", "near Edge", "middle Edge", or "far Edge" layers, relative to a network source and destination. For instance, from the perspective of the core network data center 235 or a cloud data center 245, a central office or content data network may be considered as being located within a "near Edge" layer ("near" to the cloud, having high latency values when communicating with the devices and endpoints of the use cases 205), whereas an access point, base station, on-premise server, or network gateway may be considered as located within a "far Edge" layer ("far" from the cloud, having low latency values when communicating with the devices and endpoints of the use cases 205). It will be understood that other categorizations of a particular network layer as constituting a "close", "local", "near", "middle", or "far" Edge may be based on latency, distance, number of network hops, or other measurable characteristics, as measured from a source in any of the network layers 200-240.

The various use cases 205 may access resources under usage pressure from incoming streams, due to multiple services utilizing the Edge cloud. To achieve results with low latency, the services executed within the Edge cloud 110 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor, etc.).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to Service Level Agreement (SLA), the system as a whole (components in the transaction) may provide the ability to (1) understand the impact of the SLA violation, and (2) augment other components in the system to resume overall transaction SLA, and (3) implement remediation.

Thus, with these variations and service features in mind, Edge computing within the Edge cloud 110 may provide the ability to serve and respond to multiple applications of the use cases 205 (e.g., object tracking, video surveillance, connected cars, etc.) in real-time or near real-time, and meet ultra-low latency requirements for these multiple applications. These advantages enable a whole new class of applications (e.g., Virtual Network Functions (VNFs), Function as a Service (FaaS), Edge as a Service (EaaS), standard processes, etc.), which cannot leverage conventional cloud computing due to latency or other limitations.

However, with the advantages of Edge computing comes the following caveats. The devices located at the Edge are often resource constrained and therefore there is pressure on usage of Edge resources. Typically, this is addressed through pooling of memory and storage resources for use by multiple users (tenants) and devices. The Edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required, because Edge locations may be unmanned and may even need permissioned access (e.g., when housed in a third-party location). Such issues are magnified in the Edge cloud 110 in a multi-tenant, multi-owner, or multi-access setting, where services and applications are requested by many users, especially as network usage dynamically fluctuates and the composition of the multiple stakeholders, use cases, and services changes.

At a more generic level, an Edge computing system may be described to encompass any number of deployments at the previously discussed layers operating in the Edge cloud 110 (network layers 200-240), which provide coordination from client and distributed computing devices. One or more Edge gateway nodes, one or more Edge aggregation nodes, and one or more core data centers may be distributed across layers of the network to provide an implementation of the Edge computing system by or on behalf of a telecommunication service provider ("telco", "CommSP", or "TSP"), internet-of-things service provider, cloud service provider (CSP), enterprise entity, or any other number of entities. Various implementations and configurations of the Edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the Edge computing system does not necessarily mean that such node or device operates in a client or agent/minion/follower role; rather, any of the nodes or devices in the Edge computing system refer to individual entities, nodes, or subsystems which include discrete or connected hardware or software configurations to facilitate or use the Edge cloud 110.

As such, the Edge cloud 110 is formed from network components and functional features operated by and within Edge gateway nodes, Edge aggregation nodes, or other Edge compute nodes among network layers 210-230. The Edge cloud 110 thus may be embodied as any type of network that provides Edge computing and/or storage resources which are proximately located to radio access network (RAN) capable endpoint devices (e.g., mobile computing devices, IoT devices, smart devices, etc.), which are discussed herein. In other words, the Edge cloud 110 may be envisioned as an "Edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks, etc.) may also be utilized in place of or in combination with such 3GPP carrier networks.

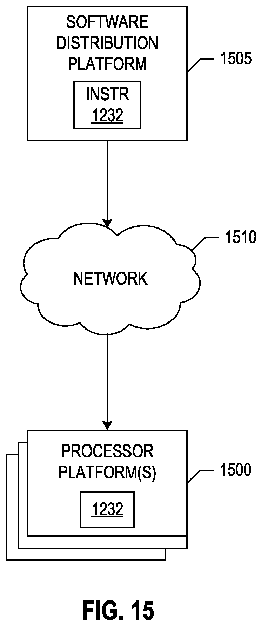

The network components of the Edge cloud 110 may be servers, multi-tenant servers, appliance computing devices, and/or any other type of computing devices. For example, the Edge cloud 110 may include an appliance computing device that is a self-contained electronic device including a housing, a chassis, a case, or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., electromagnetic interference (EMI), vibration, extreme temperatures, etc.), and/or enable submergibility. Example housings may include power circuitry to provide power for stationary and/or portable implementations, such as alternating current (AC) power inputs, direct current (DC) power inputs, AC/DC converter(s), DC/AC converter(s), DC/DC converter(s), power regulators, transformers, charging circuitry, batteries, wired inputs, and/or wireless power inputs. Example housings and/or surfaces thereof may include or connect to mounting hardware to enable attachment to structures such as buildings, telecommunication structures (e.g., poles, antenna structures, etc.), and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, infrared or other visual thermal sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, rotors such as propellers, etc.) and/or articulating hardware (e.g., robot arms, pivotable appendages, etc.). In some circumstances, the sensors may include any type of input devices such as user interface hardware (e.g., buttons, switches, dials, sliders, microphones, etc.). In some circumstances, example housings include output devices contained in, carried by, embedded therein and/or attached thereto. Output devices may include displays, touchscreens, lights, light-emitting diodes (LEDs), speakers, input/output (I/O) ports (e.g., universal serial bus (USB)), etc. In some circumstances, Edge devices are devices presented in the network for a specific purpose (e.g., a traffic light), but may have processing and/or other capacities that may be utilized for other purposes. Such Edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 15. The Edge cloud 110 may also include one or more servers and/or one or more multi-tenant servers. Such a server may include an operating system and implement a virtual computing environment. A virtual computing environment may include a hypervisor managing (e.g., spawning, deploying, commissioning, destroying, decommissioning, etc.) one or more virtual machines, one or more containers, etc. Such virtual computing environments provide an execution environment in which one or more applications and/or other software, code, or scripts may execute while being isolated from one or more other applications, software, code, or scripts.

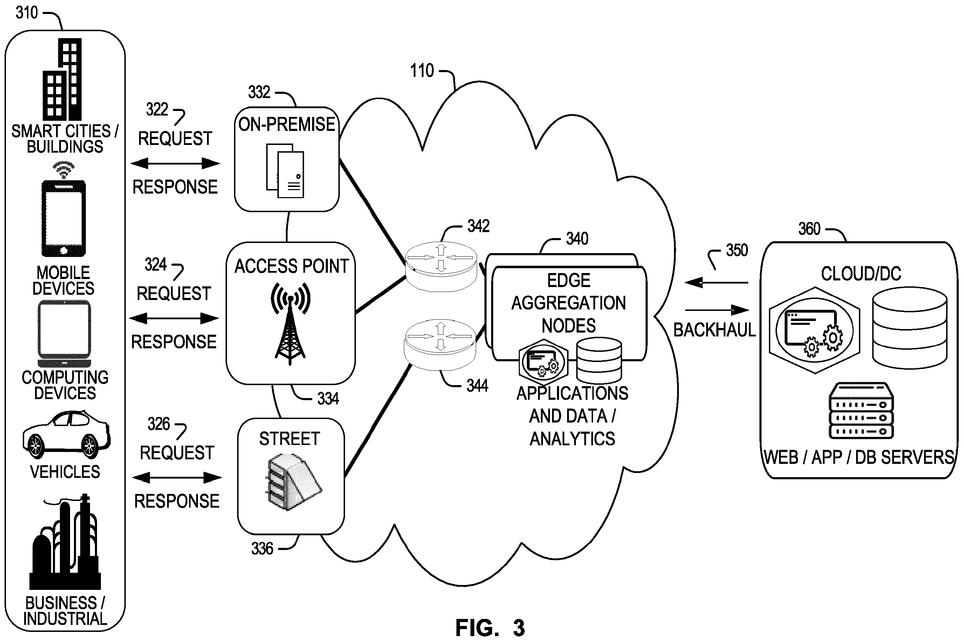

In FIG. 3, various client endpoints 310 (in the form of mobile devices, computers, autonomous vehicles, business computing equipment, industrial processing equipment) exchange requests and responses that are specific to the type of endpoint network aggregation. For instance, client endpoints 310 may obtain network access via a wired broadband network, by exchanging requests and responses 322 through an on-premise network system 332. Some client endpoints 310, such as mobile computing devices, may obtain network access via a wireless broadband network, by exchanging requests and responses 324 through an access point (e.g., a cellular network tower) 334. Some client endpoints 310, such as autonomous vehicles may obtain network access for requests and responses 326 via a wireless vehicular network through a street-located network system 336. However, regardless of the type of network access, the TSP may deploy aggregation points 342, 344 within the Edge cloud 110 to aggregate traffic and requests. Thus, within the Edge cloud 110, the TSP may deploy various compute and storage resources, such as at Edge aggregation nodes 340, to provide requested content. The Edge aggregation nodes 340 and other systems of the Edge cloud 110 are connected to a cloud or data center 360, which uses a backhaul network 350 to fulfill higher-latency requests from a cloud/data center for websites, applications, database servers, etc. Additional or consolidated instances of the Edge aggregation nodes 340 and the aggregation points 342, 344, including those deployed on a single server framework, may also be present within the Edge cloud 110 or other areas of the TSP infrastructure.

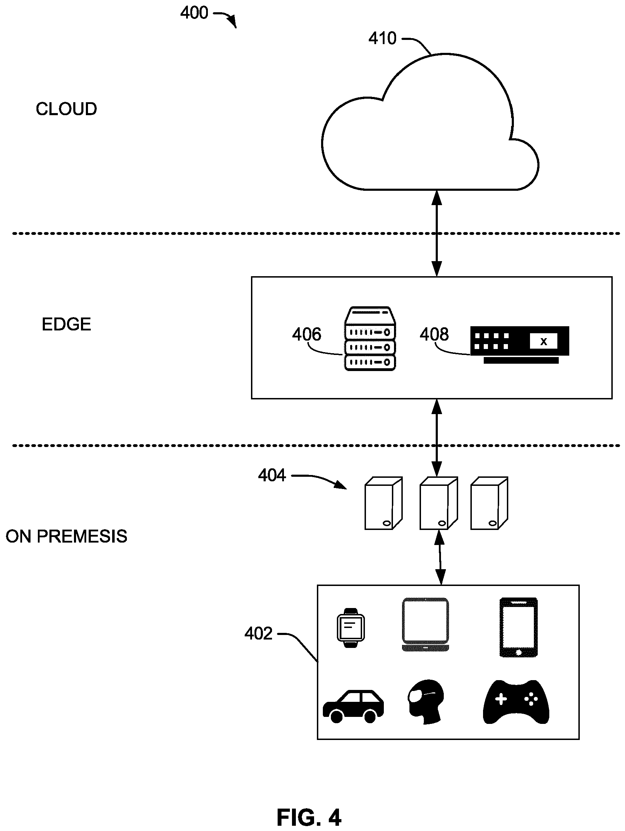

FIG. 4 is an illustration of an example first Edge networking infrastructure 400. The example Edge first networking infrastructure 400 includes a cloud 410, example Edge servers 406, example Edge network switches 408, example premise servers 404, and example endpoint devices 402. As shown in FIG. 4, the example first Edge networking infrastructure 400 spans three layers: a cloud layer, an edge layer, and a premise layer. Each of the example cloud layer, the example edge layer, and the example on premise layers are physically separated. As described in association with FIGS. 1-3, physical separation introduces communication latency and may be associated with other performance degradation. As used herein, "premises" refers to a physical location where Edge computing occurs.

The example cloud 410 includes computing resources and may provide a variety of services to the example Edge servers 406 and/or the example endpoint devices 402. For example, the cloud 410 may provide software as a service, in which applications are hosted in the cloud 410 and accessed by the example Edge server 406. Additionally, or alternatively, the example cloud 410 may provide a platform as a service, in which the example Edge server 406 is provided computing resources, tools, and/or other infrastructure. Additionally, or alternatively, the example cloud 410 may provide functions as a service (e.g., serverless computing), in which the example cloud 410 allocates computing resources for the example Edge servers 406. In some examples, services and/or resources from the cloud 410 are provided to the example Edge devices 402 by transmission through the example edge servers 406 and/or the example Edge network switches 408. In the illustration of FIG. 4, the example cloud 410 connects directly to the example Edge server 406 and the example network switches 408.

The example Edge servers 406 and the example Edge network switches 408 are shown in FIG. 4 as part of an Edge layer, located between the cloud layer (e.g., the cloud 410) and the premise layer (e.g., the example premise servers 404, the example endpoint devices 402). The example network switch 408 is a network switch located at a meeting point of the cloud layer and the premise layer. The example network switch 408 connects devices between the cloud layer and the premise layers by using packet switching to receive and forward data from a first device (e.g., a premise layer device) to a second device (e.g., a device in the cloud).

The example Edge servers 406 are located physically closer to the endpoint devices 402 than the example cloud layer. The example Edge servers 406 include computing resources and may provide a variety of services to the example premise layer devices. However, as described in association with FIGS. 1-3, computing resources in the Edge layer are typically less capable than the highly centralized computing resources of the cloud 410. However, as the example Edge servers 406 are located physically closer to the endpoint devices 402, latency between the Edge servers 406 and the example endpoint devices 402 is reduced.

The example the premise servers 404 are located on the same premises as the endpoint devices 402. For example, the premise servers 404 may be operated by a company and physically located at company headquarters (e.g., in a server room). As the example endpoint devices 402 are also physically located in the premise layer, the example endpoint devices 402 can access the premise servers 404 with relatively less latency than would be associated with access to devices in the Edge layer (e.g., the example Edge server 406) and/or the cloud layer (e.g., the cloud 410).

The endpoint devices 402 are physically located in the premises layer and may include one or more: laptops, mobile devices, gaming systems, smart watches, AR/VR systems (e.g., a VR headset), IoT devices, etc. However, as described in association with FIGS. 1-3, the example endpoint devices 402 may have limited resources. Thus, the endpoint devices 402 often rely, at least in part, on resources and services from outside the premises layer (e.g., other parts of the example first networking infrastructure 400).

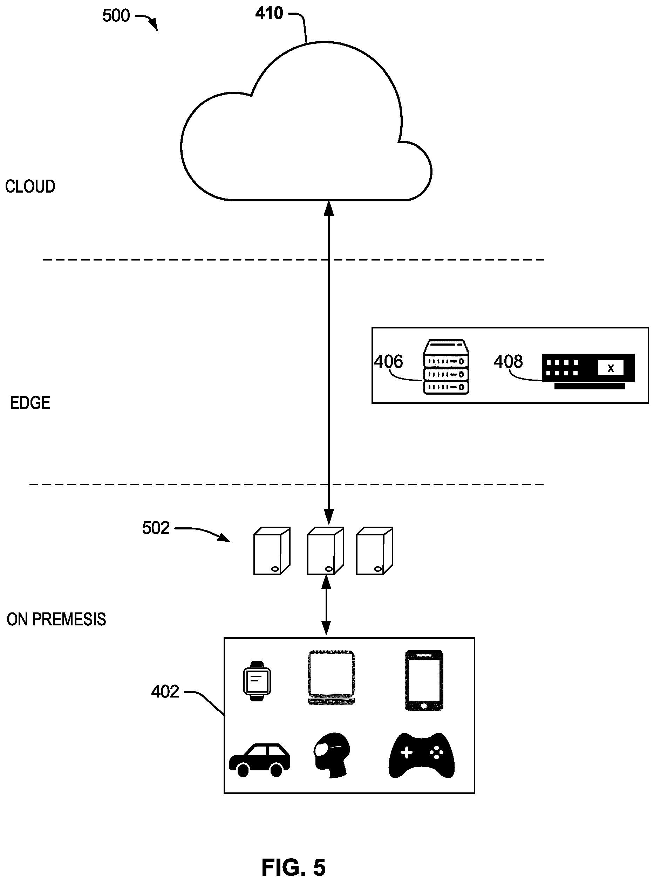

The illustration of FIG. 4 shows one example configuration of the example cloud 410, the example edge servers 406, the example network switches 408, the example servers 404, and the example endpoint devices 402. However, many alternative groupings are possible. One such alternative grouping is described in association with FIG. 5.

FIG. 5 is an illustration of an example second Edge networking infrastructure 500. The example second Edge networking infrastructure 500 includes the example cloud 410, the example Edge servers 406, the example Edge network switches 408, example second premise servers 502, and the example endpoint devices 402. The example cloud 410, the example Edge servers 406, the example Edge network switches 408, and the example endpoint devices 402 are described above in association with the example first Edge networking infrastructure 400. However, the example Edge servers 406, the example Edge network switches 408, and the example endpoint devices 402 are in an alternative arrangement in association with the example second Edge networking infrastructure 500.

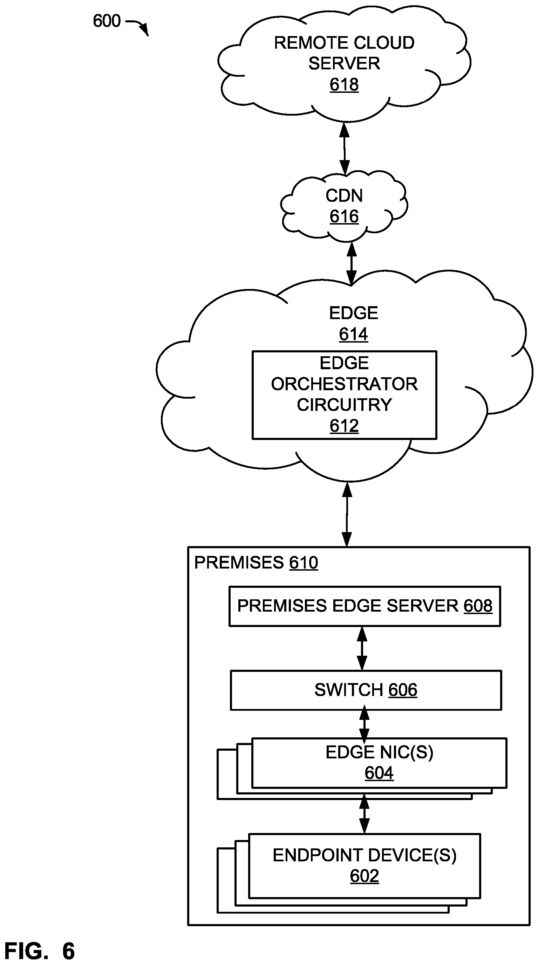

The example second Edge networking infrastructure 500 includes additional specialized computer hardware (e.g., Edge NICs, hardware accelerators, etc.). Specifically, the example second Edge networking infrastructure 500 includes the example second premise servers 502, which further include Edge network interface cards with additional features and compute capability. As described herein, an Edge NIC (e.g., smart NIC, hardware accelerator, etc.) is a programmable network interface card based accelerator for Edge computing. Specific architecture, capabilities, and features associated with Edge NICs, such as the Edge NICs of the second premise servers 502, will be described in association with FIGS. 6-11 below.

Although the example first architecture 400 of FIG. 4 and the example second architecture 500 may perform similar tasks, the first architecture 400 and the second architecture 500 are structurally distinct. For example, as described above, the second premise servers 502 include additional hardware (e.g., Edge NICs) that move processing from the edge layer to the premise layer. Furthermore, in the example second Edge networking infrastructure 500, the premise layer and the cloud layer are directly connected. Therefore, in the example second Edge networking infrastructure 500, the example Edge servers 406 and the example Edge network switches 408 are not associated with communication between the premise layer and the cloud layer. A network designed in accordance with the example second Edge networking infrastructure 500 may benefit multi-tenant, multi-owner, or multi-access settings, where services and applications are requested by many users. In such a setting, usage may dynamically and/or rapidly change.

FIG. 6 illustrates an example third Edge networking architecture 600 for facilitating network interface device-based edge computing. The example third Edge networking architecture 600 includes an example remote cloud server 618, an example content delivery network (CDN) 616, an example Edge 614, example Edge orchestrator circuitry 612, example premises 610, an example premises edge server 608, an example switch 606, example Edge NIC(s) 604, and example endpoint device(s) 602.

The example remote cloud server 618 may provide content, services, etc. in response to a request from the example endpoint devices 602. In some examples, the remote cloud server 618 provides content to the example CDN 616. The example CDN 618 includes one or more physically distributed servers that store content, bringing the content closer to the endpoint devices 602. For example, the CDN 616 can store cached content in a plurality of physical locations in response to anticipated demand for the content. As the example CDN 616 brings content closer to the endpoint devices (e.g., even before the content is requested), the example CDN 616 can reduce overall latency in the example third Edge networking architecture 600. The example CDN 616 is connected to the example Edge cloud 614.

The example Edge cloud 614 provides compute resources to the example premises 610. As the example Edge cloud 614 is closer to the example premises, the example Edge cloud 614 can deliver content and provide services to the example premises 610 with reduced latency. The example Edge cloud 614 additionally includes Edge orchestrator circuitry 612

The example Edge orchestrator circuitry 612 manages a plurality of computing environments. For example, the Edge orchestrator circuitry 612 may support the resource management of large-scale cloud data centers and data generation of IoT devices. The example Edge orchestrator circuitry 612 monitors Edge and/or premise resources for a current status, provisions resources for Edge and/or premise devices, and deploys applications in the example Edge cloud 614 and the example premises 610. The example Edge orchestrator circuitry 614 may distribute computing tasks, stored data, computing logic, etc., across a plurality of premises in different physical locations.

The Edge orchestrator circuitry 612 can communicate resource availability of the Edge cloud 614 to the example Edge NIC 604. The example Edge orchestrator circuitry can additionally receive resource availability from the example premises 610. The Edge orchestrator circuitry 612 promotes Edge scalability and can accommodate changing requirements associated with a distributed Edge computing environment.

The example premises 610 includes the example premises Edge server 608, the example switch 606, the example Edge NICs 604, and the example endpoint devices 602. The example premises Edge server 608 can provide resources and/or services to the example endpoint devices 602. The example switch 606 is a network switch that connects the endpoint devices 602 and the premises Edge server 608 (e.g., premises Edge server 608 and/or Edge NICs 604). For example, the switch 606 can forward data packets to and from the endpoint devices 602 and the premises Edge server 608.

The example Edge NICs 604 provide additional functionality to the example premises Edge server 608 and can improve the overall computational operation of the premises 610. The Edge NICs 604 can be added to the premises Edge server and/or other computing devices of the example premises 610. For example, the Edge NICs 604 can be installed in strategic, resource intensive locations to further reduce.

In some examples, the Edge NIC 604 may be instantiated in an infrastructure processing unit (IPU) (e.g., INTEL^{®} IPU). In such examples, the Edge NIC 604 may be a standalone compute device including a plurality of programmable cores, accelerators, memory, etc., to manage infrastructure resources. Examples using IPUs may improve networking latency (e.g., communication overhead associated with a plurality of microservices) by accelerating networking functions in a datacenter. In some examples, the Edge NICs 604 may be installed directly on a peripheral bus that has more bandwidth than the example switch 606. The example Edge NICs 604 can therefore scale more easily with an increased number of endpoint devices 602. In some examples, the edge NICs 604 can be individually configured to perform modular functions of the Edge 614 without interfering with other workloads of the example Edge 614. For example, the endpoint devices 602 (e.g., internet of things devices, computers, smartphones, etc.) may request resources that, in some previous solutions, would be provided by the example Edge 614 and/or the example premises edge server 608. However, in some examples, the Edge NICs 604 can provide some or all of the requested capabilities on device (e.g., on the Edge NICs 604), without communicating and/or otherwise requesting services from the example premises edge server 608, the example Edge 614, the example CDN 616, and/or the example remote cloud server 618.

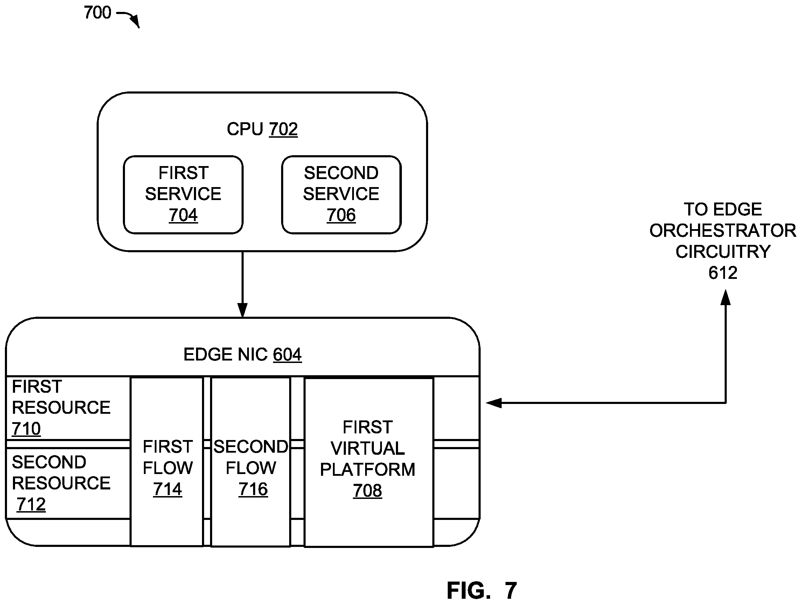

FIG. 7 is a block diagram of an example system for network interface device-based Edge computing. FIG. 7 includes an example CPU 702, the example Edge NIC 604 of FIG. 6, an example virtual platform 708, an example first resource 710, an example second resource 712, an example first flow 714, and an example second flow 716.

The example CPU 702 may be associated with one or more Edge servers, and may provide one or more services to various Edge devices. The example CPU 702 includes the example first service 704 and the example second service 706. The example first service could, for example, be a banking service (e.g., deposit funds). The example CPU additionally includes a second service 706. The example second service 706 may be a different service than the first service 704 (e.g., an identity verification service). Although only two example services are shown being provided by the example CPU 702, the example CPU 702 may perform any number of services. Additionally, the example first service 704 and the example second service 706 provide separate functions, and therefore have distinct resource requirements.

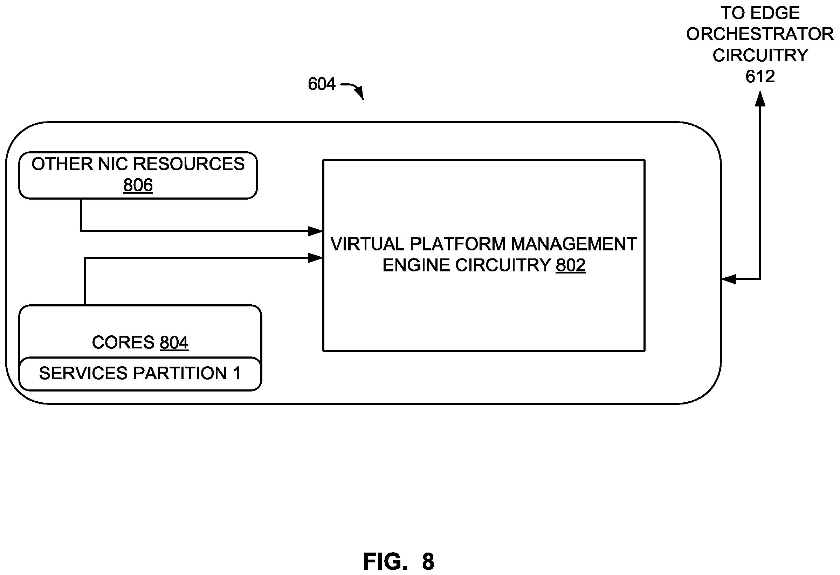

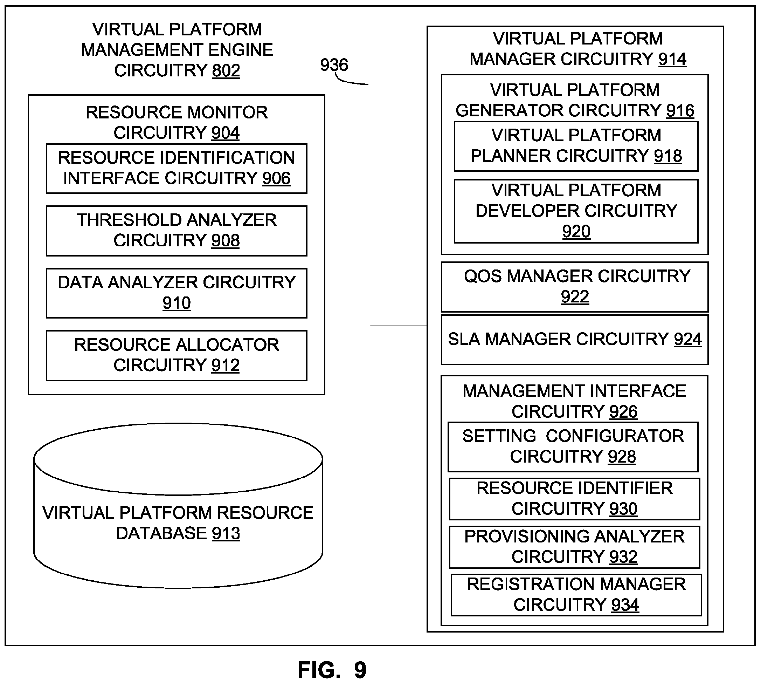

The example edge NIC 604 includes the example first resource 710, the example second resource 712, the example first flow 714, the example second flow 716, and the example first virtual platform 708. The example Edge NIC 604 additionally includes management circuitry that will be described in further detail in association with FIGS. 8 and 9.

The example Edge NIC 604 includes logic for physically or virtually allocating resources, such as the example first resource 710 and the example second resource 712. The example first resource 710 and the example second resource 712 may be identified in a main pool of resources, the example first virtual platform 708 to create the example first virtual platform 708 based on one or more identified resources.

The example Edge NIC 604 includes first flow 714 and the second flow 716. The example first flow 714 and the example second flow 716 are network flows that transmit data. However, the example first flow 714 and the example second flow 716 may include dataflow (e.g., a bitstream), resource flows, etc. The example first flow 714 is associated with the example first resource 710 and the example first service 704. In the example of FIG. 7, the example first service 704 provides features that are distinct from the example second service, and therefore the example first flow 714 carries out separate operations from the example first flow 714.

The example Edge NIC 604 additionally connects to the Edge orchestrator circuitry 612. For example, the Edge NIC 604 may communicate with the example Edge orchestrator circuitry 612 to register and manage the first virtual platform 708. The example first virtual platform 708 includes a set of resources identified from a main pool of resources within the example Edge NIC 604. For example, the Edge NIC 604 may include network hardware resources, processing resources, memory resources, etc., that can be utilized by the example Edge NIC 604 to generate the example first virtual platform 708. The example first virtual platform 708 may connect to the example edge orchestrator circuitry and provide information indicating the creation of the example first virtual platform 708. Additionally, or alternatively, the example first virtual platform 708 may, through network interface circuitry, connect to endpoint devices and provide features associated with the example first virtual platform 708. Although the example of FIG. 7 only illustrates the example first virtual platform 708, the example Edge NIC 604 may include any number of virtual platforms (e.g., a second virtual platform, a third virtual platform).

The example of FIG. 8 is a second block diagram of the example Edge NIC 604 that further includes example NIC resources 806, example cores 804, and example virtual platform management engine circuitry 802. The virtual platform management circuitry 802 may use out-of-band interfaces to allow configuration of virtual platforms (e.g., the example first virtual platform 708) and offer the out-of-band interfaces to the example edge orchestrator circuitry 612. For example, out-of-band interfaces may control virtual platforms of the example Edge NIC 604 and allow for provisioning (e.g., zero-touch provisioning) of the virtual platforms. Additionally, the example virtual platform management engine circuitry 802 may provide a mechanism to register a bit-stream in a virtual platform and/or execute a new service or function.

The example virtual platform management engine circuitry 802 additionally identifies resources of the example Edge NIC 604 that are unutilized and/or underutilized. For example, the Edge NIC 604 can identify resources (e.g., NIC resources 806 and/or cores 804) that are not used for a threshold period of time. In some examples, the virtual platform management engine circuitry 802 can determine if one or more resources are operating inefficiently. In response to identifying an underutilized resource, the underutilized resource can be reallocated by the example virtual platform management engine circuitry 802 (e.g., reallocate resources to another virtual platform). The example virtual platform management engine circuitry 802 may allocate and/or transfer resources to create a new virtual platform. The example Edge NIC 604 provisions resources on-chip, including the cores 804 (e.g., to receive instructions, to perform calculations, to perform operations) and additional NIC resources 806. Example NIC resources 806 may include field programmable gate arrays, application specific integrated circuits, volatile and/or nonvolatile memory, networking circuitry, load balancing circuitry, encryption circuitry, input-output circuitry, etc.

Functionality of the example Edge NIC 604 can be altered without redesign of the Edge NIC 604. The flexibility of the example Edge NIC 604 allows many functionalities to be added to a computing platform (e.g., a server) by addition of the Edge NIC 604. Furthermore, the example virtual platform management engine circuitry 802 may determine available resources to offload, cause service migration to an alternate compute devices, and/or migrate services to another Edge NIC (e.g., another Edge server). The example virtual platform management engine circuitry 802 can provide application programming interfaces in the same style as existing Edge computing solutions (e.g., plug-and-play Edge NICs). Additional detail regarding the example Edge NIC 604 is provided in association with FIG. 9 below.

FIG. 9 is a block diagram of the virtual platform management engine circuitry 802 as shown in FIG. 8 for facilitating network interface device-based edge networking. The virtual platform management engine circuitry 802 of FIG. 9 may be instantiated (e.g., creating an instance of, bring into being for any length of time, materialize, implement, etc.) by processor circuitry such as a central processing unit executing instructions. Additionally, or alternatively, the virtual platform management engine circuitry 802 of FIG. 9 may be instantiated (e.g., creating an instance of, bring into being for any length of time, materialize, implement, etc.) by an ASIC or an FPGA structured to perform operations corresponding to the instructions. It should be understood that some or all of the circuitry of FIG. 9 may, thus, be instantiated at the same or different times. Some or all of the circuitry may be instantiated, for example, in one or more threads executing concurrently on hardware and/or in series on hardware. Moreover, in some examples, some or all of the circuitry of FIG. 9 may be implemented by one or more virtual machines and/or containers executing on the microprocessor.

As shown in FIG. 9, the virtual platform management engine circuitry 802 includes example resource monitor circuitry 904, example resource identification interface circuitry 906, example threshold analyzer circuitry 908, example data analyzer circuitry 910, example resource allocator circuitry 912, an example virtual platform resource database 913, example virtual platform manager circuitry 914, example virtual platform generator circuitry 916, example virtual platform planner circuitry 918, virtual platform developer circuitry 920, virtual platform manager circuitry 914, example QOS manager circuitry 922, example SLA manager circuitry 924, example management interface circuitry 926, example setting configuration circuitry 928, example resource identifier circuitry 930, example provisioning analyzer circuitry 932, example registration manager circuitry 934, example resource monitor circuitry 904, example virtual platform resource database 913, and example virtual platform manager circuitry 914. An example bus 936 facilitates communication between components of the virtual platform management engine circuitry 802.

The resource identification interface circuitry 906 of the resource monitor circuitry 904 identifies resources associated with the network interface device 800 of FIG. 8. For example, the resource identification interface circuitry 906 identifies a threshold (e.g., a minimum, maximum, etc.) number of resources (e.g., five, twenty, one hundred, etc.) to generate the virtual platform for execution of a particular workload. In some examples, this threshold is identified for each of the resources associated with the Edge NIC 604 such that multiple virtual platforms may be generated for multiple workloads.

The threshold analyzer circuitry 908 of the resource monitor circuitry 904 specifies a resource inactivity time threshold (e.g., seconds, minutes, hours, etc.) indicative of how long before an underutilized resource is moved into the virtual platform resource database 913. Once the resource is moved into the virtual platform resource database 913, based on the specified inactivity threshold, the resource can be identified as a candidate resource for generation of a virtual platform. For example, the threshold analyzer circuitry 908 can retrieve and/or determine a threshold value (e.g., a floor value representing a minimum level of activity, a maximum time of underutilization, etc.) associated with one or more resources. In some examples, one or more resources may be associated with one or more threshold values (e.g., a first resource is associated with a first threshold value, a second resource is associated with a second threshold value, a third resource is associated with the first and the second threshold values, etc.). In some examples, the threshold analyzer circuitry 908 can determine a threshold value based on virtual platform activity, a resource utilization across a plurality of virtual platforms, a monitoring of hardware resources, etc. In some examples, the threshold analyzer circuitry 908 can retrieve a threshold from persistent storage (e.g., the virtual platform resource database 913). For example, the threshold analyzer circuitry 908 may retrieve a threshold value (e.g., a threshold inactivity value) from a plurality of threshold values stored in the example database 913.

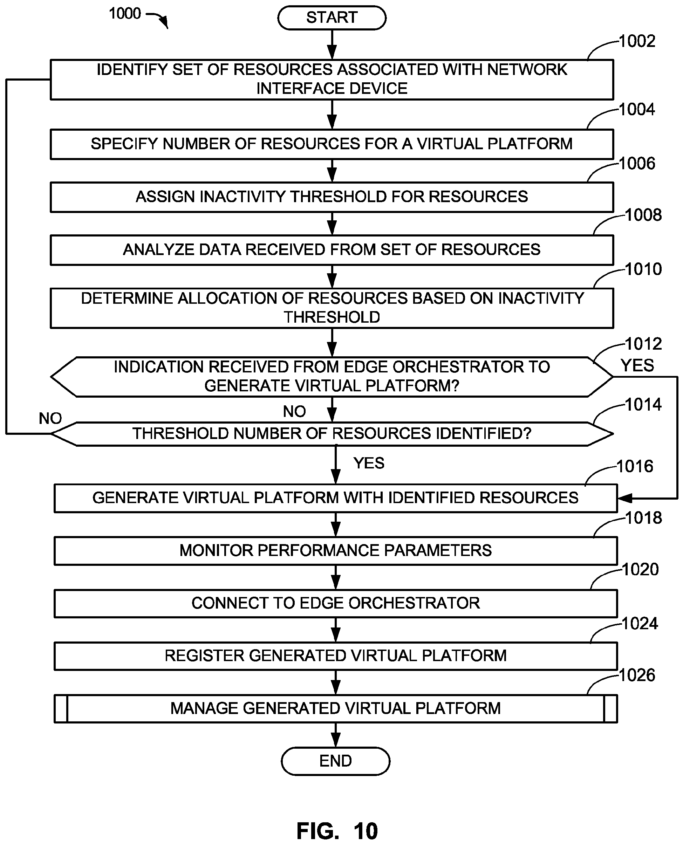

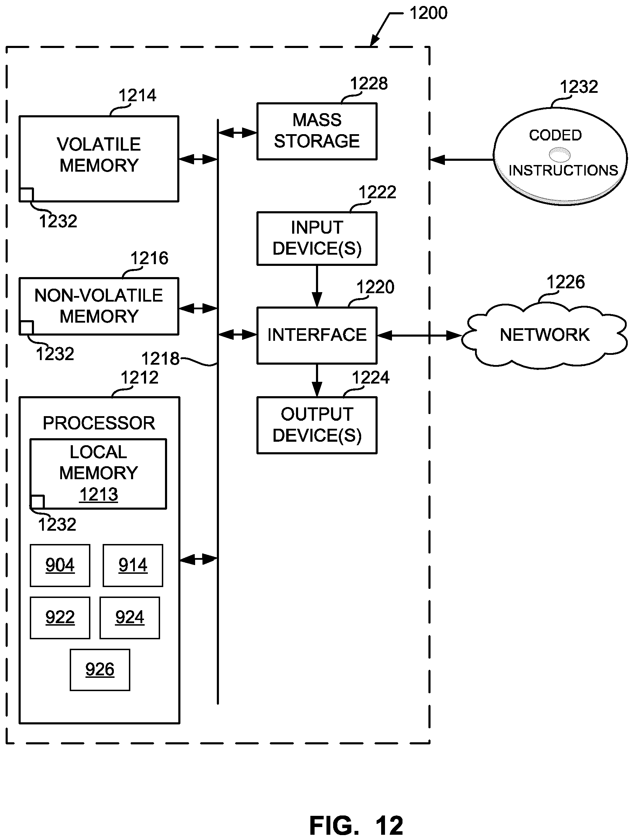

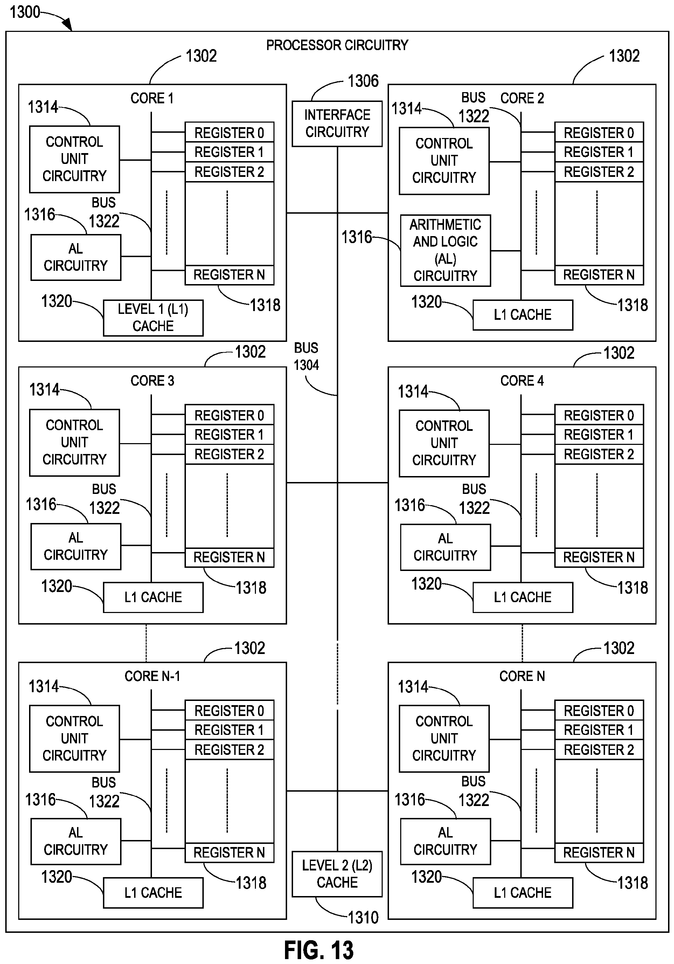

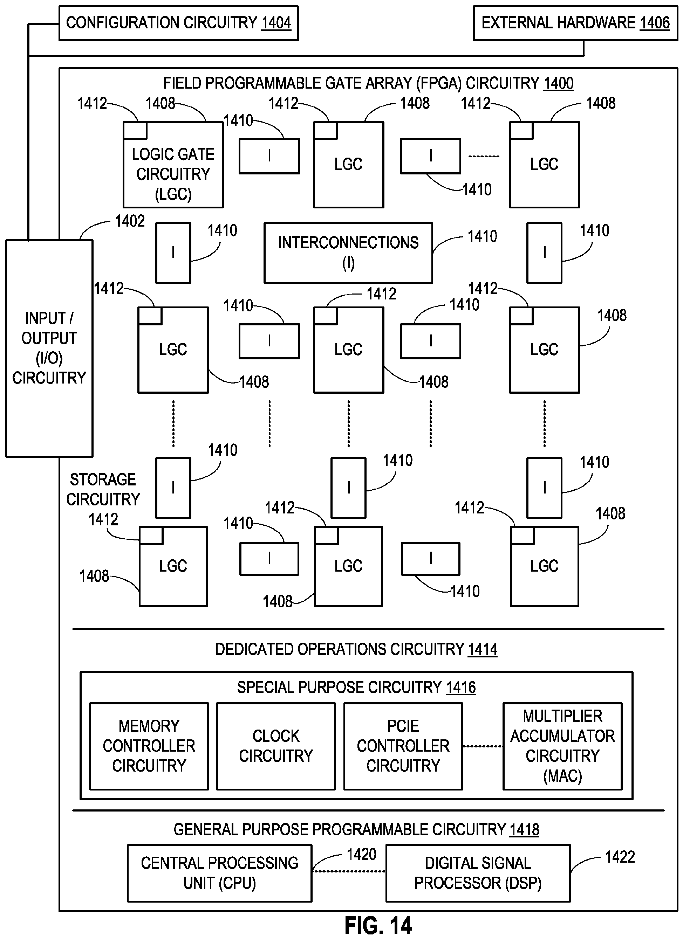

In some examples, the virtual platform management engine circuitry 802 includes means for identifying a resource inactivity threshold. For example, the means for identifying a resource inactivity threshold may be implemented by the example threshold analyzer circuitry 908. In some examples, the threshold analyzer circuitry 908 may be implemented by machine executable instructions such as that implemented by at least block 1006 of FIG. 10 executed by processor circuitry, which may be implemented by the example processor circuitry 1212 of FIG. 12, the example processor circuitry 1300 of FIG. 13, and/or the example Field Programmable Gate Array (FPGA) circuitry 1400 of FIG. 14. In other examples, the virtual platform management engine circuitry 802 is implemented by other hardware logic circuitry, hardware implemented state machines, and/or any other combination of hardware, software, and/or firmware. For example, the virtual platform management engine circuitry 802 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

The example data analyzer circuitry 910 includes data analyzer circuitry 910 that can identify data of an example Edge NIC (e.g., the example Edge NIC 604) to compose a new platform. The example resource allocator circuitry 912 may take data identified by the example resource identification interface circuitry 906 and/or the example data analyzer circuitry 910 and allocate various resources of an Edge NIC for use in processing the data. The example resource allocator circuitry 912 may additionally process telemetry coming from various resources on an Edge NIC and decide where to move certain resources (e.g., move outside to the main pool).

In some examples, the resource allocator circuitry 912 can analyze resource usage (e.g., CPU usage, memory usage, storage usage, network resource usage) to determine if one or more resources has met a resource inactivity threshold (e.g., the one or more resources were underutilized for too long). In response to the determination, the resource allocator circuitry 910 can perform an action (e.g., tag a resource for provisioning, place an indication in the platform resource database 913, etc.).

In some examples, the virtual platform management engine circuitry 802 includes means for determining that the first resource satisfies a resource inactivity threshold. For example, the means for determining a resource inactivity threshold may be implemented by the resource allocator circuitry 910. In some examples, the resource allocator circuitry 910 may be implemented by machine executable instructions such as that implemented by at least block 1006 and 1008 of FIG. 10 executed by processor circuitry, which may be implemented by the example processor circuitry 1212 of FIG. 12, the example processor circuitry 1300 of FIG. 13, and/or the example Field Programmable Gate Array (FPGA) circuitry 1400 of FIG. 14. In other examples, the virtual platform management engine circuitry 802 is implemented by other hardware logic circuitry, hardware implemented state machines, and/or any other combination of hardware, software, and/or firmware. For example, the virtual platform management engine circuitry 802 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

The example virtual platform resource database 913 may include indication of availability of various resources associated with an example Edge NIC (e.g., Edge NIC 604 of FIG. 6). For example, an Edge NIC may include processing cores, memory, network interface circuitry, and other NIC resources, with their availabilities stored in the example virtual platform resource database 913. Additionally, or alternatively, the example virtual platform database 913 may store data associated with the resources.

The example virtual platform manager circuitry 914 includes logic to physically or virtually remove/reallocate resources identified by the example resource monitor circuitry 904 (e.g., identified in a main pool of resources and/or stored in the virtual platform resource database 913), and create and/or generate new virtual platforms. In some examples, the virtual platform manager circuitry 914 can aggregate and/or amalgamate ones of a plurality of resources (e.g., the NIC resources 806 of FIG. 8, the cores 804 of FIG. 8). For example, the virtual platform manager circuitry 914 may aggregate computing resources (e.g., from one or more sources) and provide an interface for consumption of the resources (e.g., a virtual platform). For example, the virtual platform manager circuitry can generate a virtual platform dynamically by allocating resources (e.g., directing a programmable core to associate Edge NIC resources with a virtual machine or a container). Furthermore, the example virtual platform manager circuitry 914 can generate a virtual platform based on a determination that one or more resources have met (e.g., exceeded) a threshold length of underutilization. In response, the example platform manager circuitry can generate a virtual platform associated with a network interface device, which can reduce latency in execution of a function.

In some examples, the virtual platform management engine circuitry 802 includes means for generating a virtual platform associated with the network interface device based on a determination, the generated virtual platform to reduce latency in execution of a function. For example, the means for generating a virtual may be implemented by the example virtual platform manager circuitry 914. In some examples, the virtual platform manager circuitry 914 may be implemented by machine executable instructions such as that implemented by at least block 1018-1020 of FIG. 10 executed by processor circuitry, which may be implemented by the example processor circuitry 1212 of FIG. 12, the example processor circuitry 1300 of FIG. 13, and/or the example Field Programmable Gate Array (FPGA) circuitry 1400 of FIG. 14.

In some examples, the virtual platform management engine circuitry 802 further includes means for generating a virtual platform responsive to a reception of an indication. For example, means for generating a virtual platform responsive to a reception of an indication from an edge orchestrator may be implemented by the example virtual platform developer circuitry 920. In some examples, the virtual platform developer circuitry 920 may be implemented by machine executable instructions such as that implemented by at least block 1018-1020 of FIG. 10 executed by processor circuitry

The example virtual platform manager circuitry 914 includes the example virtual platform planner circuitry 918. The virtual platform manager circuitry 914, the example virtual platform planner circuitry 918, and/or more generally the example virtual platform 918 can aggregate resources (e.g., Edge NIC resources, server resources, etc.) identified in a main pool of resources, and create a new virtual platform (e.g., a new Edge NIC partition). The example virtual platform planner circuitry 918 can bind together a set of resources from the example virtual platform resource database 913 and create a new virtual platform. The example virtual platform planner circuitry 918 can create a virtual platform (e.g., a partition) when the virtual platform resource database 913 provides indications of available resources. In some examples, the example virtual platform planner circuitry 918 may include pre-defined platform configurations. For example, a first configuration may include two processing cores, two gigabytes of high bandwidth memory, and four gigabytes of double data rate memory. A second configuration may include two processing cores, two gigabytes of high bandwidth memory, and three gigabytes of double data rate memory.

The example virtual platform developer circuitry 920 may wait until an orchestrator (e.g., the example Edge orchestrator circuitry 612 of FIG. 6) requests creation of a virtual platform. In response, the example Edge orchestrator circuitry 612 of FIG. 6 can create a virtual platform (e.g., if resources are available). In some examples, the Edge orchestrator circuitry 612 can aggregate resources from a plurality of Edge NICs. In response to a reception of an indication from the example edge orchestrator circuitry 612, the example Edge NIC 604 may partition an Edge NIC in two or more virtual partitions. In some examples, the Edge NIC 604 can allocate resources (e.g., number of cores, amount of memory etc.) to one or more virtual partitions. For example, a first partition can utilized for traffic from a first connected platform, and a second partition can be utilized as an independent compute platform. In some examples, the Edge NIC 604 generate virtual partitions via a virtualized baseboard management controller.

The example QOS manager circuitry 922 and the example SLA manager circuitry 924 monitor that virtual platforms and services running on the main platform meet QoS and SLA standards requested by the orchestrator. For example, some resources cannot be physically partitioned. Some resources can be physically partitioned, but physically partitioning the resources may not be preferable (e.g., leaky bucket memory types), unless an SLA is violated.

The example management interface circuitry 926 can connect to an Edge orchestrator, register a new virtual platform, and manage a life of created virtual platforms. The example management interface circuitry 926 includes the example setting configurator circuitry 928 that can provide an out-of-band interface to configure platform characteristics. The example resource identifier circuitry 930 provides out-of-band interfaces that allow an Edge orchestrator (e.g., the example Edge orchestrator circuitry 612 of FIG. 6) to access resource availability. The example provisioning analyzer circuitry 932 can perform provisioning of available resources (e.g., zero-touch provisioning). The example registration manager circuitry 934 provides registration of bit-stream or applications in a virtual platform, and execution of new services or functions.

While an example manner of implementing the Edge NIC 604 of FIG. 6 is illustrated in FIGS. 7-9, one or more of the elements, processes, and/or devices illustrated in FIGS. 7-9 may be combined, divided, re-arranged, omitted, eliminated, and/or implemented in any other way. Further, the example virtual platform 708, the example virtual platform 708, the example first resource 710, the example second resource 712, the example first flow 714, the example second flow 716, the example first resource 710, the example second resource 712, the example first flow 714, the example second flow 716, the example NIC resources 806, the example cores 804, the example virtual platform management engine circuitry 802, the example resource monitor circuitry 904, the example resource identification interface circuitry 906, the example threshold analyzer circuitry 908, the example data analyzer circuitry 910, the example resource allocator circuitry 912, the example virtual platform resource database 913, the example virtual platform manager circuitry 914, the example virtual platform generator circuitry 916, the example virtual platform planner circuitry 918, the virtual platform developer circuitry 920, the virtual platform manager circuitry 914, the example QOS manager circuitry 922, the example SLA manager circuitry 924, the example management interface circuitry 926, the setting configuration circuitry 928, the example resource identifier circuitry 930, the example provisioning analyzer circuitry 932, the example registration manager circuitry 934, the example resource monitor circuitry 904, the example virtual platform resource database 913, and the example virtual platform manager circuitry 914, the example bus 936 and/or, more generally, the example Edge NIC 604 of FIGS 6-9, may be implemented by hardware alone or by hardware in combination with software and/or firmware. Thus, for example, any of the example virtual platform 708, the example virtual platform 708, the example first resource 710, the example second resource 712, the example first flow 714, the example second flow 716, the example first resource 710, the example second resource 712, the example first flow 714, the example second flow 716, the example NIC resources 806, the example cores 804, the example virtual platform management engine circuitry 802, the example resource monitor circuitry 904, the example resource identification interface circuitry 906, the example threshold analyzer circuitry 908, the example data analyzer circuitry 910, the example resource allocator circuitry 912, the example virtual platform resource database 913, the example virtual platform manager circuitry 914, the example virtual platform generator circuitry 916, the example virtual platform planner circuitry 918, the virtual platform developer circuitry 920, the virtual platform manager circuitry 914, the example QOS manager circuitry 922, the example SLA manager circuitry 924, the example management interface circuitry 926, the setting configuration circuitry 928, the example resource identifier circuitry 930, the example provisioning analyzer circuitry 932, the example registration manager circuitry 934, the example resource monitor circuitry 904, the example virtual platform resource database 913, and the example virtual platform manager circuitry 914, the example bus 936 and/or, more generally, the example Edge NIC 604 of FIGS 6-9, could be implemented by processor circuitry, analog circuit(s), digital circuit(s), logic circuit(s), programmable processor(s), programmable microcontroller(s), graphics processing unit(s) (GPU(s)), digital signal processor(s) (DSP(s)), application specific integrated circuit(s) (ASIC(s)), programmable logic device(s) (PLD(s)), and/or field programmable logic device(s) (FPLD(s)) such as Field Programmable Gate Arrays (FPGAs). Further still, the example Edge NIC 604 of FIGS. 6-9 may include one or more elements, processes, and/or devices in addition to, or instead of, those illustrated in FIGS. 6-9, and/or may include more than one of any or all of the illustrated elements, processes, and devices.

A flowchart representative of example hardware logic circuitry, machine readable instructions, hardware implemented state machines, and/or any combination thereof for implementing the example Edge NIC 604 of FIGS. 6-9 is shown in FIGS 10-11. The machine readable instructions may be one or more executable programs or portion(s) of an executable program for execution by processor circuitry, such as the processor circuitry 1212 shown in the example processor platform 1200 discussed below in connection with FIG. 12 and/or the example processor circuitry discussed below in connection with FIGS. 13 and/or 14. The program may be embodied in software stored on one or more non-transitory computer readable storage media such as a compact disk (CD), a floppy disk, a hard disk drive (HDD), a solid-state drive (SSD), a digital versatile disk (DVD), a Blu-ray disk, a volatile memory (e.g., Random Access Memory (RAM) of any type, etc.), or a non-volatile memory (e.g., electrically erasable programmable read-only memory (EEPROM), FLASH memory, an HDD, an SSD, etc.) associated with processor circuitry located in one or more hardware devices, but the entire program and/or parts thereof could alternatively be executed by one or more hardware devices other than the processor circuitry and/or embodied in firmware or dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a user) or an intermediate client hardware device (e.g., a radio access network (RAN)) gateway that may facilitate communication between a server and an endpoint client hardware device). Similarly, the non-transitory computer readable storage media may include one or more mediums located in one or more hardware devices. Further, although the example program is described with reference to the flowchart illustrated in FIGS. 10-11, many other methods of implementing the example Edge NIC 604 may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU), etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., as portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of machine executable instructions that implement one or more operations that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc., in order to execute the machine readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Go, Perl, Python, PyTorch, R, Rust, JavaScript, HyperText Markup Language (HTML), Scala, Structured Query Language (SQL), Swift, Programming Protocol-Independent Packet Processors (P4), Network Programing Language (NPL), etc.

As mentioned above, the example operations of FIGS 10-11. may be implemented using executable instructions (e.g., computer and/or machine readable instructions) stored on one or more non-transitory computer and/or machine readable media such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium and non-transitory computer readable storage medium are expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements or method actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 10 is a flowchart representative of example machine readable instructions and/or example operations 1000 that may be executed and/or instantiated by processor circuitry to perform network interface device based edge computing. The machine readable instructions and/or the operations 1000 of FIG. 10 begin at block 1002, at which the example resource identification interface circuitry 906 of FIG. 9 identifies a set of resources associated with network interface device. At block 1004, the example resource allocator circuitry 912 of FIG. 9 specifies a number of resources for a virtual platform. At block 1006, the example threshold analyzer circuitry 908 assigns an inactivity threshold for resources. At block 1008, the example data analyzer circuitry 910 analyzes data received from a set of resources. At block 1010, the example threshold analyzer circuitry 908 determines an allocation of resources based on an inactivity threshold. At block 1012, the example management interface circuitry 926 checks for an indication received from an Edge orchestrator to generate virtual platform. If so, the instructions continue at block 1016, otherwise the instructions continue at block 1014.

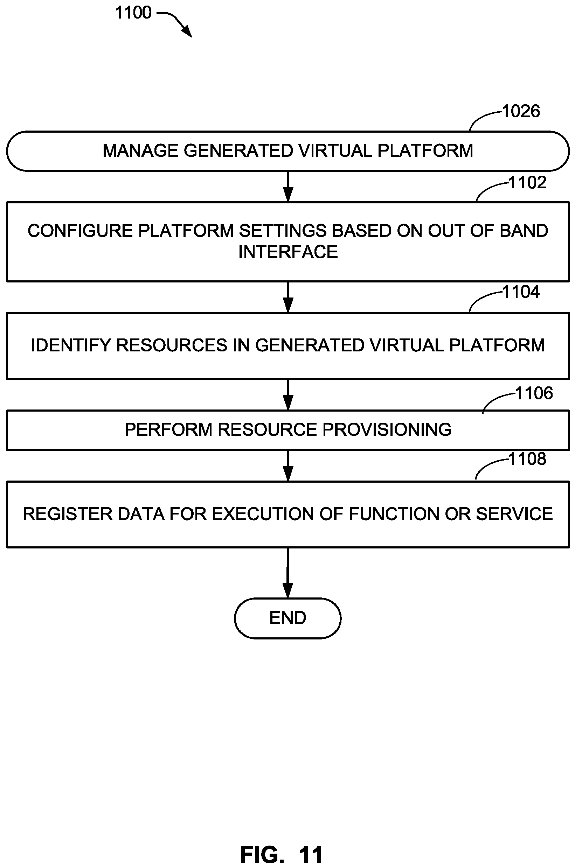

At block 1014, the example threshold analyzer circuitry 910 checks if a threshold number of resources are identified (e.g., resources are available). If so, the instructions continue at block 1016, otherwise, the instructions return to block 1002. At block 1016, the example virtual platform generator circuitry 916 generates a virtual platform with the identified resources. At block 1018, the example QOS manager circuitry 922 and/or the example SLA manager circuitry 924 monitor performance parameters. At block 1020, the example management interface circuitry 926 connects to the example edge orchestrator circuitry 624 of FIG. 6. At block 1024, the example registration generation circuitry 934 registers the generated virtual platform. At block 1026, the example virtual platform manager circuitry 914 manages the generated virtual platform. The operations of block 1026 will be described in further detail in association with FIG. 11. The instructions 1000 end.

FIG. 11 is a flowchart representative of example machine readable instructions and/or example operations 1100 that may be executed and/or instantiated by processor circuitry to manage a generated virtual platform. The instructions of FIG. 11 begin at block 1026, at which the example virtual platform manager circuitry 914 manages a virtual platform. At block 1102, the example virtual platform generator circuitry 916 configures platform settings based on out-of-band interface. At block 1104, the example management interface circuitry identifies resources in the generated virtual platform. At block 1106, the example provisioning analyzer circuitry 932 performs a resource provisioning. At block 1108, the example registration manager circuitry 934 registers data for execution of a function or a service. The instructions of 1100 end.

FIG. 12 is a block diagram of an example processor platform 1200 structured to execute and/or instantiate the machine readable instructions and/or the operations of FIGS. 10-11 to implement the example Edge NIC 604 of FIGS. 6-9 The processor platform 1200 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing device.

The processor platform 1200 of the illustrated example includes processor circuitry 1212. The processor circuitry 1212 of the illustrated example is hardware. For example, the processor circuitry 1212 can be implemented by one or more integrated circuits, logic circuits, FPGAs, microprocessors, CPUs, GPUs, DSPs, and/or microcontrollers from any desired family or manufacturer. The processor circuitry 1212 may be implemented by one or more semiconductor based (e.g., silicon based) devices. In this example, the processor circuitry 412 implements the example virtual platform 708, the example virtual platform 708, the example first resource 710, the example second resource 712, the example first flow 714, the example second flow 716, the example first resource 710, the example second resource 712, the example first flow 714, the example second flow 716, the example NIC resources 806, the example cores 804, the example virtual platform management engine circuitry 802, the example resource monitor circuitry 904, the example resource identification interface circuitry 906, the example threshold analyzer circuitry 908, the example data analyzer circuitry 910, the example resource allocator circuitry 912, the example virtual platform resource database 913, the example virtual platform manager circuitry 914, the example virtual platform generator circuitry 916, the example virtual platform planner circuitry 918, the virtual platform developer circuitry 920, the virtual platform manager circuitry 914, the example QOS manager circuitry 922, the example SLA manager circuitry 924, the example management interface circuitry 926, the setting configuration circuitry 928, the example resource identifier circuitry 930, the example provisioning analyzer circuitry 932, the example registration manager circuitry 934, the example resource monitor circuitry 904, the example virtual platform resource database 913, and the example virtual platform manager circuitry 914, the example bus 936.

The processor circuitry 1212 of the illustrated example includes a local memory 1213 (e.g., a cache, registers, etc.). The processor circuitry 1212 of the illustrated example is in communication with a main memory including a volatile memory 1214 and a non-volatile memory 1216 by a bus 1218. The volatile memory 1214 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1216 may be implemented by flash memory and/or any other desired type of memory device. Access to the main memory 1214, 1216 of the illustrated example is controlled by a memory controller 1217.

The processor platform 1200 of the illustrated example also includes interface circuitry 1220. The interface circuitry 1220 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1222 are connected to the interface circuitry 1220. The input device(s) 1222 permit(s) a user to enter data and/or commands into the processor circuitry 1212. The input device(s) 1222 can be implemented by, for example, an audio sensor, a microphone, a camera (still or video), a keyboard, a button, a mouse, a touchscreen, a track-pad, a trackball, an isopoint device, and/or a voice recognition system.

One or more output devices 1224 are also connected to the interface circuitry 1220 of the illustrated example. The output device(s) 1224 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1220 of the illustrated example, thus, typically includes a graphics driver card, a graphics driver chip, and/or graphics processor circuitry such as a GPU.

The interface circuitry 1220 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1226. The communication can be by, for example, an Ethernet connection, a digital subscriber line (DSL) connection, a telephone line connection, a coaxial cable system, a satellite system, a line-of-site wireless system, a cellular telephone system, an optical connection, etc.

The processor platform 1200 of the illustrated example also includes one or more mass storage devices 1228 to store software and/or data. Examples of such mass storage devices 1228 include magnetic storage devices, optical storage devices, floppy disk drives, HDDs, CDs, Blu-ray disk drives, redundant array of independent disks (RAID) systems, solid state storage devices such as flash memory devices and/or SSDs, and DVD drives.

The machine executable instructions 1232, which may be implemented by the machine readable instructions of FIGS. 10-11, may be stored in the mass storage device 1228, in the volatile memory 1214, in the non-volatile memory 1216, and/or on a removable non-transitory computer readable storage medium such as a CD or DVD

FIG. 13 is a block diagram of an example implementation of the processor circuitry 1212 of FIG. 12. In this example, the processor circuitry 1212 of FIG. 12 is implemented by a general purpose microprocessor 1300. The general purpose microprocessor circuitry 1300 executes some or all of the machine readable instructions of the flowchart of FIG. 13 to effectively instantiate the example Edge NIC 604 as logic circuits to perform the operations corresponding to those machine readable instructions. In some such examples, the circuitry of FIGS. 6-9 is instantiated by the hardware circuits of the microprocessor 1300 in combination with the instructions. For example, the microprocessor 1300 may implement multi-core hardware circuitry such as a CPU, a DSP, a GPU, an XPU, etc. Although it may include any number of example cores 1302 (e.g., 1 core), the microprocessor 1300 of this example is a multi-core semiconductor device including N cores. The cores 1302 of the microprocessor 1300 may operate independently or may cooperate to execute machine readable instructions. For example, machine code corresponding to a firmware program, an embedded software program, or a software program may be executed by one of the cores 1302 or may be executed by multiple ones of the cores 1302 at the same or different times. In some examples, the machine code corresponding to the firmware program, the embedded software program, or the software program is split into threads and executed in parallel by two or more of the cores 1302. The software program may correspond to a portion or all of the machine readable instructions and/or operations represented by the flowchart of FIGS 10-11.

The cores 1302 may communicate by a first example bus 1304. In some examples, the first bus 1304 may implement a communication bus to effectuate communication associated with one(s) of the cores 1302. For example, the first bus 1304 may implement at least one of an Inter-Integrated Circuit (I2C) bus, a Serial Peripheral Interface (SPI) bus, a PCI bus, or a PCIe bus. Additionally or alternatively, the first bus 1304 may implement any other type of computing or electrical bus. The cores 1302 may obtain data, instructions, and/or signals from one or more external devices by example interface circuitry 1306. The cores 1302 may output data, instructions, and/or signals to the one or more external devices by the interface circuitry 1306. Although the cores 1302 of this example include example local memory 1320 (e.g., Level 1 (LI) cache that may be split into an L1 data cache and an L1 instruction cache), the microprocessor 1300 also includes example shared memory 1310 that may be shared by the cores (e.g., Level 2 (L2_ cache), or Last Level Cache (LLC)) for high-speed access to data and/or instructions. Data and/or instructions may be transferred (e.g., shared) by writing to and/or reading from the shared memory 1310. The local memory 1320 of each of the cores 1302 and the shared memory 1310 may be part of a hierarchy of storage devices including multiple levels of cache memory and the main memory (e.g., the main memory 1214, 1216 of FIG. 12). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1302 may be referred to as a CPU, DSP, GPU, etc., or any other type of hardware circuitry. Each core 1302 includes control unit circuitry 1314, arithmetic and logic (AL) circuitry (sometimes referred to as an ALU) 1316, a plurality of registers 1318, the L1 cache 1320, and a second example bus 1322. Other structures may be present. For example, each core 1302 may include vector unit circuitry, single instruction multiple data (SIMD) unit circuitry, load/store unit (LSU) circuitry, branch/jump unit circuitry, floating-point unit (FPU) circuitry, etc. The control unit circuitry 1314 includes semiconductor-based circuits structured to control (e.g., coordinate) data movement within the corresponding core 1302. The AL circuitry 1316 includes semiconductor-based circuits structured to perform one or more mathematic and/or logic operations on the data within the corresponding core 1302. The AL circuitry 1316 of some examples performs integer based operations. In other examples, the AL circuitry 1316 also performs floating point operations. In yet other examples, the AL circuitry 1316 may include first AL circuitry that performs integer based operations and second AL circuitry that performs floating point operations. In some examples, the AL circuitry 1316 may be referred to as an Arithmetic Logic Unit (ALU). The registers 1318 are semiconductor-based structures to store data and/or instructions such as results of one or more of the operations performed by the AL circuitry 1316 of the corresponding core 1302. For example, the registers 1318 may include vector register(s), SIMD register(s), general purpose register(s), flag register(s), segment register(s), machine specific register(s), instruction pointer register(s), control register(s), debug register(s), memory management register(s), machine check register(s), etc. The registers 1318 may be arranged in a bank as shown in FIG. 13. Alternatively, the registers 1318 may be organized in any other arrangement, format, or structure including distributed throughout the core 1302 to shorten access time. The second bus 1322 may implement at least one of an I2C bus, a SPI bus, a PCI bus, or a PCIe bus

Each core 1302 and/or, more generally, the microprocessor 1300 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1300 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

FIG. 14 is a block diagram of another example implementation of the processor circuitry 1212 of FIG. 12. In this example, the processor circuitry 1212 is implemented by FPGA circuitry 1400. The FPGA circuitry 1400 can be used, for example, to perform operations that could otherwise be performed by the example microprocessor 1300 of FIG. 13 executing corresponding machine readable instructions. However, once configured, the FPGA circuitry 1400 instantiates the machine readable instructions in hardware and, thus, can often execute the operations faster than they could be performed by a general purpose microprocessor executing the corresponding software.

More specifically, in contrast to the microprocessor 1300 of FIG. 13 described above (which is a general purpose device that may be programmed to execute some or all of the machine readable instructions represented by the flowchart of FIGS. 10-11 but whose interconnections and logic circuitry are fixed once fabricated), the FPGA circuitry 1400 of the example of FIG. 14 includes interconnections and logic circuitry that may be configured and/or interconnected in different ways after fabrication to instantiate, for example, some or all of the machine readable instructions represented by the flowchart of FIGS. 10-11. In particular, the FPGA 1400 may be thought of as an array of logic gates, interconnections, and switches. The switches can be programmed to change how the logic gates are interconnected by the interconnections, effectively forming one or more dedicated logic circuits (unless and until the FPGA circuitry 1400 is reprogrammed). The configured logic circuits enable the logic gates to cooperate in different ways to perform different operations on data received by input circuitry. Those operations may correspond to some or all of the software represented by the flowchart of FIGS. 10-11. As such, the FPGA circuitry 1400 may be structured to effectively instantiate some or all of the machine readable instructions of the flowchart of FIGS. 10-1as dedicated logic circuits to perform the operations corresponding to those software instructions in a dedicated manner analogous to an ASIC. Therefore, the FPGA circuitry 1400 may perform the operations corresponding to the some or all of the machine readable instructions of FIGS. 10-11 faster than the general purpose microprocessor can execute the same.

In the example of FIG. 14, the FPGA circuitry 1400 is structured to be programmed (and/or reprogrammed one or more times) by an end user by a hardware description language (HDL) such as Verilog. The FPGA circuitry 1400 of FIG. 14, includes example input/output (I/O) circuitry 1402 to obtain and/or output data to/from example configuration circuitry 1404 and/or external hardware (e.g., external hardware circuitry) 1406. For example, the configuration circuitry 1404 may implement interface circuitry that may obtain machine readable instructions to configure the FPGA circuitry 1400, or portion(s) thereof. In some such examples, the configuration circuitry 1404 may obtain the machine readable instructions from a user, a machine (e.g., hardware circuitry (e.g., programmed or dedicated circuitry) that may implement an Artificial Intelligence/Machine Learning (AI/ML) model to generate the instructions), etc. In some examples, the external hardware 1406 may implement the microprocessor 1300 of FIG. 13. The FPGA circuitry 1400 also includes an array of example logic gate circuitry 1408, a plurality of example configurable interconnections 1410, and example storage circuitry 1412. The logic gate circuitry 1408 and interconnections 1410 are configurable to instantiate one or more operations that may correspond to at least some of the machine readable instructions of FIGS. 10-11 and/or other desired operations. The logic gate circuitry 1408 shown in FIG. 14 is fabricated in groups or blocks. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1408 to enable configuration of the electrical structures and/or the logic gates to form circuits to perform desired operations. The logic gate circuitry 1408 may include other electrical structures such as look-up tables (LUTs), registers (e.g., flip-flops or latches), multiplexers, etc.

The interconnections 1410 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1408 to program desired logic circuits.

The storage circuitry 1412 of the illustrated example is structured to store result(s) of the one or more of the operations performed by corresponding logic gates. The storage circuitry 1412 may be implemented by registers or the like. In the illustrated example, the storage circuitry 1412 is distributed amongst the logic gate circuitry 1408 to facilitate access and increase execution speed.

The example FPGA circuitry 1400 of FIG. 14 also includes example Dedicated Operations Circuitry 1414. In this example, the Dedicated Operations Circuitry 1414 includes special purpose circuitry 1416 that may be invoked to implement commonly used functions to avoid the need to program those functions in the field. Examples of such special purpose circuitry 1416 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1400 may also include example general purpose programmable circuitry 1418 such as an example CPU 1420 and/or an example DSP 1422. Other general purpose programmable circuitry 1418 may additionally or alternatively be present such as a GPU, an XPU, etc., that can be programmed to perform other operations.

Although FIGS. 5 and 6 illustrate two example implementations of the processor circuitry 412 of FIG. 4, many other approaches are contemplated. For example, as mentioned above, modern FPGA circuitry may include an on-board CPU, such as one or more of the example CPU 1420 of FIG. 6. Therefore, the processor circuitry 1212 of FIG. 12 may additionally be implemented by combining the example microprocessor 1300 of FIG. 13 and the example FPGA circuitry 1400 of FIG. 14. In some such hybrid examples, a first portion of the machine readable instructions represented by the flowchart of FIG. 10-11 may be executed by one or more of the cores 1302 of FIG. 13, a second portion of the machine readable instructions represented by the flowchart of FIGS. 10-11 may be executed by the FPGA circuitry 1400 of FIG. 14, and/or a third portion of the machine readable instructions represented by the flowchart of FIGS. 10-11 may be executed by an ASIC. It should be understood that some or all of the circuitry of FIGS. 6-9 may, thus, be instantiated at the same or different times. Some or all of the circuitry may be instantiated, for example, in one or more threads executing concurrently and/or in series. Moreover, in some examples, some or all of the circuitry of FIGS. 6-9 may be implemented within one or more virtual machines and/or containers executing on the microprocessor.

In some examples, the processor circuitry 1212 of FIG. 12 may be in one or more packages. For example, the processor circuitry 1300 of FIG. 13 and/or the FPGA circuitry 1400 of FIG. 14 may be in one or more packages. In some examples, an XPU may be implemented by the processor circuitry 1212 of FIG. 12, which may be in one or more packages. For example, the XPU may include a CPU in one package, a DSP in another package, a GPU in yet another package, and an FPGA in still yet another package.

A block diagram illustrating an example software distribution platform 1405 to distribute software such as the example machine readable instructions 1232 of FIG. 12 to hardware devices owned and/or operated by third parties is illustrated in FIG. 15. The example software distribution platform 1505 may be implemented by any computer server, data facility, cloud service, etc., capable of storing and transmitting software to other computing devices. The third parties may be customers of the entity owning and/or operating the software distribution platform 1505. For example, the entity that owns and/or operates the software distribution platform 1505 may be a developer, a seller, and/or a licensor of software such as the example machine readable instructions 1232 of FIG. 12 . The third parties may be consumers, users, retailers, OEMs, etc., who purchase and/or license the software for use and/or re-sale and/or sub-licensing. In the illustrated example, the software distribution platform 1505 includes one or more servers and one or more storage devices. The storage devices store the machine readable instructions 1232, which may correspond to the example machine readable instructions 1000 of FIGS. 10-11, as described above. The one or more servers of the example software distribution platform 1505 are in communication with a network 1510, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1232 from the software distribution platform 1505. For example, the software, which may correspond to the example machine readable instructions 1000 of FIGS. 10-11, may be downloaded to the example processor platform 1200, which is to execute the machine readable instructions 1232 to implement the Edge NIC 604 of FIGS. 6-9. In some examples, one or more servers of the software distribution platform 1505 periodically offer, transmit, and/or force updates to the software (e.g., the example machine readable instructions 1232 of FIG.9) to ensure improvements, patches, updates, etc., are distributed and applied to the software at the end user devices.

From the foregoing, it will be appreciated that example systems, methods, apparatus, and articles of manufacture have been disclosed that facilitate network interface device based edge computing. Disclosed systems, methods, apparatus, and articles of manufacture improve the efficiency of using a computing device by intelligently configuring an Edge platform in a general-purpose and flexible way, providing a platform that is performant across different workloads with a single platform configuration. Furthermore, disclosed examples improve upon NIC architectures, setting forth smart NICs (e.g., Edge NICs) with logic to divide a NIC in two or more virtual partitions. Disclosed systems, methods, apparatus, and articles of manufacture are accordingly directed to one or more improvement(s) in the operation of a machine such as a computer or other electronic and/or mechanical device.

Example methods, apparatus, systems, and articles of manufacture to facilitate network interface device-based Edge computing are disclosed herein. Further examples and combinations thereof include the following:
Example 1 includes a network interface device comprising interface circuitry, and processor circuitry including one or more of at least one of a central processing unit, a graphic processing unit, or a digital signal processor, the at least one of the central processing unit, the graphic processing unit, or the digital signal processor having control circuitry to control data movement within the processor circuitry, arithmetic and logic circuitry to perform one or more first operations corresponding to instructions, and one or more registers to store a result of the one or more first operations, the instructions in the apparatus, a Field Programmable Gate Array (FPGA), the FPGA including logic gate circuitry, a plurality of configurable interconnections, and storage circuitry, the logic gate circuitry and interconnections to perform one or more second operations, the storage circuitry to store a result of the one or more second operations, or Application Specific Integrated Circuitry (ASIC) including logic gate circuitry to perform one or more third operations, the processor circuitry to perform at least one of the first operations, the second operations or the third operations to instantiate threshold analyzer circuitry to identify a resource inactivity threshold for a first resource associated with the network interface device, the resource inactivity threshold indicative of a duration of time that the first resource is not utilized, resource allocator circuitry to determine that the first resource meets the resource inactivity threshold, and virtual platform manager circuitry to generate a virtual platform associated with the network interface device based on the determination, the generated virtual platform to reduce latency in execution of a function.
Example 2 includes the network interface device of example 1, further including platform developer circuitry to generate the virtual platform responsive to a reception of an indication from an edge orchestrator to generate the virtual platform.
Example 3 includes the network interface device of example 2, wherein to generate the virtual platform is based on a resource requirement of the edge orchestrator.
Example 4 includes the network interface device in any foregoing example, further including a platform planner to generate the virtual platform responsive to an indication that a threshold number of resources have been identified.
Example 5 includes the network interface device in any foregoing example, further including resource identifier circuitry to perform zero-touch provisioning on a resource associated with the virtual platform.
Example 6 includes the network interface device in any foregoing example, further including a resource analyzer circuitry to identify a number of resources for generation of the virtual platform.
Example 7 includes the network interface device in any foregoing example, further including at least one of an operating system or a hypervisor to determine if a network interface device includes resource management capabilities, and in response to a determination the network interface device includes resource management capabilities, enable the resource management capabilities.
Example 8 includes a non-transitory computer readable medium comprising instructions, which, when executed, cause processor circuitry to at least identify a resource inactivity threshold for a first resource associated with a network interface device, the resource inactivity threshold indicative of a duration of time that the first resource is not utilized, determine that the resource satisfies the first resource inactivity threshold, and generate the virtual platform associated with the network interface device based on the determination, the generated virtual platform to reduce latency in execution of a function.
Example 9 includes the non-transitory computer readable medium of example 8, wherein the instructions, when executed, cause the processor circuitry to generate the virtual platform responsive to a reception of an indication from an edge orchestrator to generate the virtual platform.
Example 10 includes the non-transitory computer readable medium of example 9, wherein to generate the virtual platform is based on a resource requirement of the edge orchestrator.
Example 11 includes the non-transitory computer readable medium in any foregoing example, wherein the instructions, when executed, cause the processor circuitry to generate the virtual platform responsive to an indication that a threshold number of resources have been identified.
Example 12 includes the non-transitory computer readable medium in any foregoing example, wherein the instructions, when executed, cause the processor circuitry to perform zero-touch provisioning on a resource associated with the virtual platform.
Example 13 includes the non-transitory computer readable medium in any foregoing example, wherein the instructions, when executed, cause the processor circuitry to identify a number of resources for generation of the virtual platform.
Example 14 includes the non-transitory computer readable medium in any foregoing example, wherein the instructions, when executed, cause the processor circuitry to determine if a network interface device includes resource management capabilities, and in response to a determination the network interface device includes resource management capabilities, enable the resource management capabilities.
Example 15 includes a method comprising identifying, by executing an instruction with processor circuitry, a resource inactivity threshold for a first resource associated with a network interface device, the resource inactivity threshold indicative of a duration of time that the resource is not utilized, determining, by executing an instruction with the processor circuitry, that the first resource satisfies the resource inactivity threshold, and generating, by executing an instruction with the processor circuitry, the virtual platform associated with the network interface device based on the determination, the generated virtual platform to reduce latency in execution of a function.
Example 16 includes the method of example 15, further including generating the virtual platform responsive to a reception of an indication from an edge orchestrator to generate the virtual platform.
Example 17 includes the method of example 16, wherein to generate the virtual platform is based on a resource requirement of the edge orchestrator.
Example 18 includes the method in any foregoing example, further including generating the virtual platform responsive to an indication that a threshold number of resources have been identified.
Example 19 includes the method in any foregoing example, further including causing the processor circuitry to perform zero-touch provisioning on a resource associated with the virtual platform.
Example 20 includes the method in any foregoing example, further including identifying a number of resources for generation of the virtual platform.
Example 21 includes the method of example 15, further including determining if a network interface device includes resource management capabilities, and enabling the resource management capabilities.
Example 22 is an edge computing gateway, comprising processing circuitry to perform any of Examples 15-21.
Example 23 is an edge computing node, comprising processing circuitry to perform any of Examples 15-21.
Example 24 is a base station, comprising a network interface card and processing circuitry to perform any of Examples 15-21.
Example 25 is a computer-readable medium comprising instructions to perform any of Examples 15-21.

The following claims are hereby incorporated into this Detailed Description by this reference. Although certain example systems, methods, apparatus, and articles of manufacture have been disclosed herein, the scope of coverage of this patent is not limited thereto. On the contrary, this patent covers all systems, methods, apparatus, and articles of manufacture fairly falling within the scope of the claims of this patent.

## Claims

1. A method comprising:
identifying, by executing an instruction with processor circuitry, a resource inactivity threshold for a first resource associated with a network interface device, the first resource inactivity threshold indicative of a duration of time that the resource is not utilized;
determining, by executing an instruction with the processor circuitry, that the first resource satisfies the resource inactivity threshold; and
generating, by executing an instruction with the processor circuitry, a virtual platform associated with the network interface device.

2. The method of claim 1, wherein the generated virtual platform is to reduce a latency of a function execution.

3. The method of any of the preceding claims, further including generating the virtual platform responsive to reception of an indication to generate the virtual platform.

4. The method of any of the preceding claims, wherein generating the virtual platform is based on an indication from the edge orchestrator.

5. The method of any of the preceding claims, wherein the generation of the virtual platform is based on a resource requirement.

6. The method of any of the preceding claims, further including generating the virtual platform responsive to an indication that a threshold number of resources have been identified.

7. The method of any of the preceding claims, further including causing the processor circuitry to perform zero-touch provisioning on a resource associated with the virtual platform.

8. The method of any of the preceding claims, further including identifying a number of resources for generation of the virtual platform.

9. The method of any of the preceding claims, further including determining if a network interface device includes resource management capabilities.

10. The method of any of the preceding claims further including enabling the resource management capabilities.

11. An apparatus comprising at least one processor to perform the method of any of the preceding claims.

12. At least one computer-readable medium comprising computer-readable instructions that, when executed, cause at least one processor to perform the method of any of claims 1 to 11.
